# EUROPÄISCHE PATENTSCHRIFT

(11) **EP 0 970 572 B1**
(45) Veröffentlichungstag und Bekanntmachung des Hinweises auf die Patenterteilung: **22.01.2003**
(21) Anmeldenummer: 98914804.4
(22) Anmeldetag: 23.02.1998
(51) Int. Cl.: H04B 10/08, H04B 10/00, H04B 10/24

(54) **OPTISCHE ÜBERTRAGUNGSEINRICHTUNG UND VERFAHREN ZUR ÜBERPRÜFUNG DER ÜBERTRAGUNG IN EINER OPTISCHEN ÜBERTRAGUNGSEINRICHTUNG**
OPTICAL TRANSMISSION DEVICE AND METHOD FOR CHECKING TRANSMISSION IN AN OPTICAL TRANSMISSION DEVICE
UNITE DE TRANSMISSION OPTIQUE ET PROCEDE POUR CONTROLER LA TRANSMISSION DANS UNE TELLE UNITE

(30) Priorität: 27.03.1997 DE 19712759
(43) Veröffentlichungstag der Anmeldung: 12.01.2000
(73) Patentinhaber: ROBERT BOSCH GMBH, 70442 Stuttgart (DE)
(72) Erfinder: KOEPPEN, Jan, D-31139 Hildesheim (DE); NEUMANN, Günter, D-31162 Bad Salzdetfurth (DE); LAUSEN, Hans, D-31134 Hildesheim (DE); BERSINER, Lutz, D-31139 Hildesheim (DE)
(86) Internationale Anmeldenummer: DE9800532
(87) Internationale Veröffentlichungsnummer: WO98044660

(56) Entgegenhaltungen:
- EP-A- 0 437 198
- EP-A- 0 440 276
- EP-A- 0 721 275
- WO-A-97/09803
- DE-A- 4 433 031

## Beschreibung

Die Erfindung geht aus von der E-A- 0 437 198 und betrifft dementsprechend ein Verfahren nach dem Oberbegriff des Anspruchs 1.

Die Erfindung betrifft ferner eine zur Durchführung des Verfahrens geeignete optische Übertragungseinrichtung nach dem Oberbegriff des Anspruchs 9.

Optische Glasfaserleitungen haben sich zur verlustarmen Übertragung von Informationen mit einer hohen Informationsdichte als besonders geeignet herausgestellt. Üblicherweise in elektrischer Form vorliegende Informationssignale werden beispielsweise mit Leuchtdioden oder Laserdioden in optische Signale umgewandelt und in eine entsprechende optische Faserleitung eingekoppelt. An geeigneten Stellen des Leitungsnetzes wird das Signal beispielsweise mit einer Fotodiode detektiert und wieder in ein elektrisches Signal umgewandelt, als das es in üblicher Form weiterverarbeitet werden kann. Diese Signalübertragung eignet sich für Überwindung großer Entfernungen. In geeigneten Abständen sind in die entsprechenden Leitungen Verstärker und/oder Regeneratoren eingesetzt, die sicherstellen sollen, daß das Signal in gut empfangbarer Form an der beispielsweise durch eine Fotodiode gebildeten Signalsenke ankommt. Wie bei den elektrischen Netzen ist es erforderlich, Knoten vorzusehen, durch die Signale an einen bestimmten gewünschten Empfänger geleitet werden und durch die es ermöglicht wird, für einen Haupt-Leitungsweg einen Ersatzweg vorzusehen, falls die Übertragung auf dem Haupt-Leitungsweg gestört werden sollte. Durch entsprechend vorgesehene Bytes in einem Overhead des zu übertragenden Nutzsignals können auch automatische Ersatzleitungsschaltungen vorgenommen werden. Nachteilig an diesem Verfahren ist, daß die Schaltung eines Ersatzweges nur innerhalb eines festgelegten Übertragungsstandards für die Nutzsignale möglich ist und daß in dem bekannten System eine optoelektronische Wandlung des Signals an den Enden der mit einem Ersatzweg geschützten Strecke erforderlich ist. Diese Enden fallen nicht notwendigerweise mit den Quellen/Senken der Nutzsignale zusammen.

Durch die EP 0 440 276 B1 ist es bekannt, außerhalb des Nutzsignalbands dem Nutzsignal ein Kommunikationssignal mittels optischen Kopplern hinzuzufügen. Damit können Steuer- und Befehlssignale zwischen Knoten der Übertragungseinrichtung übertragen werden. Während die Übertragung der Nutzsignale in dem sogenannten "dritten Fenster" erfolgt, ist für die Übertragung der Kommunikationssignale das "zweite Fenster" vorgesehen worden. Die "Fenster" ergeben sich aus den Dämpfungseigenschaften des Glasfasermaterials für bestimmte Wellenlängenbereiche. In dem "dritten Fenster" ist die Dämpfung minimal, während das "zweite Fenster" durch ein anderes Dämpfungsminimum gebildet ist, in dem jedoch die niedrigen Dämpfungswerte des "dritten Fensters" nicht erreicht werden. Für Servicekommunikationen an dem Leitungsnetz steht somit ein eigenes Übertragungsband zur Verfügung.

Die vorliegende Erfindung geht von der Problemstellung aus, in einer optischen Übertragungseinrichtung auf Leitungsausfälle schnell und flexibel reagieren zu können, ohne nicht von Ausfall betroffene Teile des Leitungsnetzes wesentlich zu beinträchtigen.

Gelöst wird das Problem durch das Verfahren nach Anspruch 1 beziehungsweise durch die Übertragungseinrichtung nach Anspruch 9; vorteilhafte Weiterbildungen sind in den abhängigen Ansprüchen angegeben.

Die Signalwege der Übertragungseinrichtung werden dadurch überwacht, daß in den Nutzsignalfasern Prüfsignale übermittelt werden, die von Prüfsignaleinrichtungen ausgesandt und empfangen werden. Die Prüfsignaleinrichtungen sind wenigstens an den Signalquellen und Signalsenken sowie jeweils beiderseits der Knoten vorgesehen. Durch die Prüfsignaleinrichtungen werden Leitungsabschnitte auf das Vorhandensein von Prüfsignalen in den an der Prüfeinrichtung in Signalrichtung ankommenden Fasern überwacht und Prüfsignale in die abgehenden Fasern eingespeist, so daß das Vorhandensein von Prüfsignalen durch bezüglich der Signalleitungssrichtung stromabwärts liegende Prüfeinrichtungen überprüfbar ist. Dabei wird vorausgesetzt, daß in den bidirektionalen Übertragungseinrichtungen die Signalübertragung in einer Faser jeweils nur in einer Richtung stattfindet.

Stellt die aktive Prüfeinrichtung fest, daß ein Prüfsignal aus einer Leitungsrichtung nicht empfangen wird, wird das Aussenden des Prüfsignals von der Prüfeinrichtung zur stromaufwärts liegenden Prüfeinrichtung unterbrochen, so daß die stromaufwärts liegende Prüfeinrichtung eine Information über den Nichtempfang des Prüfsignals an der stromabwärts liegenden Prüfeinrichtung erhält. Die entsprechenden Informationen der Prüfeinrichtungen können als Indikationssignal zur Umschaltung innerhalb von Knoten auf einen Ersatzweg verwendet werden, falls ein solcher Ersatzweg existiert. Existiert ein entsprechender Ersatzweg nicht, kann das Indikationssignal zur Abgabe eines Alarms dienen.

Vorzugsweise sind die aktiven Prüfeinrichtungen mit einer Netzsteuerung verbunden und geben ein entsprechendes Indikationssignal an die Netzsteuerung ab, so daß ggf. übergeordnete Maßnahmen als Reaktion auf den Leitungsausfall ergriffen werden können.

· Für die Durchführung der Erfindung ist es besonders vorteilhaft, wenn die aktiven Prüfeinrichtungen das jeweils ankommende Prüfsignal von dem Nutzsignal separieren und dem abgehenden Nutzsignal wieder ein Prüfsignal hinzufügen. Dadurch ist sichergestellt, daß immer nur ein Prüfsignal von der letzten stromaufwärts liegenden aktiven Prüfeinrichtung erzeugt worden ist und daß nicht etwa Prüfsignale vorhergehender Prüfeinrichtungen detektiert werden.

Die Flexibilität des erfindungsgemäßen Systems wird besonders groß, wenn die aktiven Prüfeinrichtungen durch die Netzsteuerung passiv schaltbar sind und die passiv geschalteten Prüfeinrichtungen ein empfangenes Prüfsignal lediglich weiterleiten. Die passiv geschalteten Prüfeinrichtungen haben dann keine eigene Funktion mehr. Auf diese Weise ist es möglich, die Länge des jeweils überwachten Prüfabschnitts der aktuellen Situation anzupassen, was insbesondere bei der Wahl von Ersatzwegen in einem Netz bedeutsam sein kann.

In Zukunft werden auf optischen Faserleitungen mehrere Nutzsignale zunehmend im Wellenlängenmultiplex übertragen. Für die vorliegende Erfindung ist es zweckmäßig, für alle auf einer Faser übertragenen Nutzsignale ein gemeinsames Prüfsignal zu bilden, das selektierbar die Prüfinformationen für die einzelnen Nutzsignale enthält. Da die gemeinsam auf einer Faser ankommenden Nutzsignale in Knoten regelmäßig auf verschiedene Ausgangsfasern verteilt werden, ist es erforderlich, das neue Prüfsignal für die betreffende Ausgangsfaser mit den Prüfinformationen für die auf der Ausgangsfaser abzusendenden Nutzsignale neu zusammenzustellen.

Die erfindungsgemäße Überprüfung und Steuerung der Übertragungseinrichtungen mit Hilfe der bidirektional ausgesendeten Prüfsignale ist auch für optische Übertragungseinrichtungen sinnvoll, auf denen die Nutzsignale nur in eine Richtung, also unidirektional, übertragen werden. Erforderlich ist dabei lediglich, daß die auf einer Übertragungsstrecke in beiden Richtungen übertragenen Prüfsignale getrennt werden. Dies kann in einer zweckmäßigen Ausführungsform dadurch erfolgen, daß die Prüfsignale in den beiden entgegengesetzten Richtungen auf unterschiedlichen Wellenlängen ausgesandt und somit über wellenlängenselektive Koppler in die Faser für die Nutzdaten eingekoppelt bzw. aus den Nutzdaten ausgekoppelt werden können. Werden die Prüfsignale in beiden Richtungen auf derselben Wellenlänge übertragen, können Sie an den Enden der Übertragungsstrecken beispielsweise über optische Zirkulatoren ausgekoppelt werden.

Die Erfindung soll im folgenden anhand von in der Zeichnung dargestellten Ausführungsbeispielen näher erläutert werden. Es zeigen:
- Figur 1 -: eine schematische Darstellung einer Übertragungsstrecke zwischen Signalquellen bzw. -senken
- Figur 2a - d -: ein Ausführungsbeispiel für eine verzweigte Leitungsstrecke mit einer schematischen Darstellung der sich dabei ergebenden optischen Abschnitte und Prüfsignalabschnitte für eine fehlerfreie Haupt-Signalstrecke bzw. eine gestörte Haupt-Signalstrecke
- Figur 3a - d -: eine Darstellung gemäß Figuren 2a - 2d für ein anderes Ausführungsbeispiel einer verzweigten Leitungsstrecke
- Figur 4 -: eine schematische Darstellung einer Prüfsignaieinrichtung
- Figur 5a und 5b-: schematische Darstellungen für den Aufbau eines Knotens mit einer Mehrzahl ankommender Glasfasern und einer Mehrzahl abgehender Glasfasern für ein außerhalb bzw. ein innerhalb des Nutzsignalbandes liegendes Prüfsignal
- Figur 6 -: eine schematische Darstellung für den Aufbau eines Prüfsignals für dreißig Nutzsignale
- Figur 7 -: eine schematische Darstellung eines Knotens mit Prüfsignaleinrichtungen in einer Übertragungseinrichtung für unidirektional übertragene Nutzsignale
- Figur 8 -: eine alternative Ausführungsform für die Ein- und Auskopplung von Prüfsignalen in unidirektional übertragene Nutzsignale.

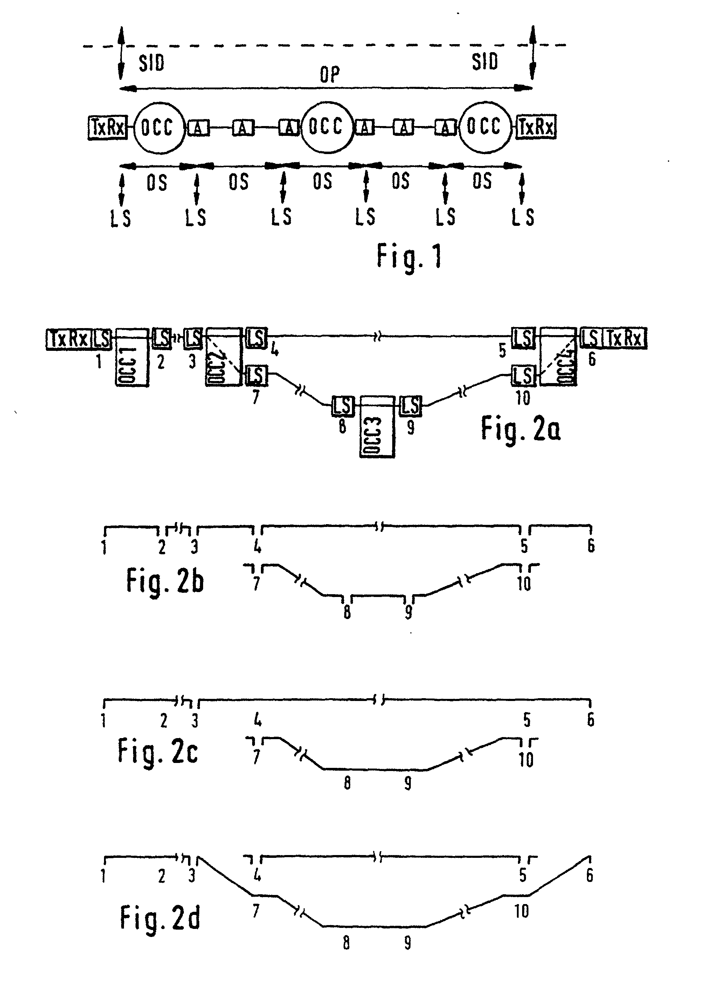

Figur 1 verdeutlicht schematisch eine optische Übertragungsstrecke OP zwischen zwei Signalquellen bzw. Signalsenken S/D, die als Schnittstellen markierende Doppelpfeile in Figur 1 dargestellt sind. Demzufolge befinden sich an den Enden der Übertragungsstrecke OP jeweils ein Sender/Empfänger TxRx. Die Übertragungsstrecke weist in dem dargestellten Ausführungsbeispiel drei Knoten OCC (Optischer Crossconnect) und eine Mehrzahl von Verstärkern/Regeneratoren A auf.

Die Übertragungsstrecke OP wird in optische Abschnitte OS unterteilt, die aneinander anschließen und jeweils an den Ein-/Ausgängen der Sender/Empfänger TxRx bzw. an beiden Anschlußpunkten der Knoten OCC enden und dort die Einkopplung eines Prüfsignals LS (Life Signal) erlauben. Ein optischer Abschnitt OS ist nicht notwendigerweise mit Verstärkern/Regeneratoren verknüpft, so daß die dargestellten Verstärker/Regeneratoren A für die Aufteilung der optischen Abschnitte OS nicht zwingend erforderlich sind.

Figur 2a zeigt ein Ausführungsbeispiel für eine verzweigte Übertragungsstrecke OP zwischen zwei Sendern/Empfängern TxRx, die jeweils mit Schaltungspunkte 1 und 6 bildenden Prüfeinrichtungen LS1, LS6 verbunden sind. Ein erster Knoten OCC1 ermöglicht die Einleitung der Nutzsignale in eine Übertragungsstrecke. Bezüglich der dargestellten Übertragungsstrecke weist der erste Knoten OCC1 an seinen vom Schaltungspunkt 1 abgewandten Ausgang eine Prüfeinrichtung LS2 am Schaltungspunkt 2 auf. Es schließt sich eine Übertragungsstrecke an, die am Schaltungspunkt 3 in einer Prüfeinrichtung LS3 endet. Daran schließt sich ein zweiter Knoten OCC2 an, der eine Verzweigung ermöglicht und zwei Anschlüsse an Leitungspunkten 4 und 7 aufweist, an denen sich Prüfeinrichtungen LS4 und LS7 befinden. Der Leitungspunkt 4 bildet mit einem entfernten Leitungspunkt 5 als reguläre Übertragungsstrecke einen Regelweg 4-5, die an einer Prüfeinrichtung LS5 mit einem nachfolgenden vierten Knoten OCC4 endet. Dieser Knoten weist einen weiteren Anschluß an einem Leitungspunkt 10 mit einer Prüfeinrichtung LS10 auf, an der ein Ersatzweg 7-10 endet. In den Ersatzweg ist dem dargestellten Ausführungsbeispiel ein dritter Knoten OCC3 eingeschaltet, der beidseitig an Leitungspunkten 8 und 9 mit Prüfeinrichtungen LS8, LS9 versehen ist.

Das andere Ende des vierten Knotens OCC4 ist mit dem die optische Übertragungsstrecke OP abschließenden Sender/Empfänger TxRx mit der Prüfeinrichtung LS6 verbunden.

Figur 2b verdeutlicht die sich daraus ergebenden optischen Abschnitte 1-2, 2-3, 3-4, 4-5, 5-6, 7-8, 8-9, 9-10, wobei die optischen Abschnitte zwischen den Leitungspunkten 7 und 10 einen Ersatz für den Regelweg 4-5 bilden.

Figur 2c verdeutlicht, daß für die Überwachung dieser Leitungskonfiguration für den Fall eines funktionierenden Regelwegs 4-5 nur drei Prüfabschnitte 1-3, 3-6, 7-10 benötigt werden, so daß die Prüfeinrichtungen LS2, LS4, LS5, LS8 und LS9 passiv geschaltet werden können, so daß diese Prüfeinrichtungen ein Prüfsignal nicht bearbeiten, sondern lediglich durchleiten müssen.

Die Prüfsignalabschnitte werden mit folgenden Regeln gebildet:
- an allen Quellen und Senken S/D von Nutzsignalen beginnt und endet immer ein Prüfsignalabschnitt
- am Beginn und Ende einer passiven Übertragungsstrecke beginnt/endet immer ein Prüfsignalabschnitt
- am Beginn/Ende einer mit einem Ersatzweg geschützten Übertragungsstrecke beginnt/endet immer ein Prüfsignalabschnitt. Der optische Abschnitt im Knoten am Beginn/Ende eines Prüfsignalabschnitts bildet eine Einheit mit dem Prüfsignalabschnitt der entsprechenden aktiven Übertragungsstrecke.

Alle jeweils nicht am Ende eines Prüfsignalabschnitts benötigten Prüfeinrichtungen werden passiv geschaltet, d.h. das Prüfsignal wird lediglich durchgeleitet.

Wird nun auf dem Prüfabschnitt 1-3 das Fehlen eines Prüfsignals LS festgestellt, steht kein Ersatzweg zur Verfügung, so daß ein Alarm an eine zentrale Netzwerksteuerung (Telekommunication Management Network) gegeben wird. Auf den Leitungsausfall muß der Bediener der Netzwerksteuerung reagieren.

Fällt hingegen das Prüfsignal auf dem einen Regelweg bildenden Prüfabschnitt 3-6 aus, werden die Knoten OCC2 und OCC4 zur Umschaltung veranlaßt und die Prüfeinrichtungen neu konfiguriert, so daß nunmehr die Prüfeinrichtungen LS4 und LS5 zur Überprüfung der Reparatur des Prüfabschnitts 4-5 aktiv geschaltet werden, während die bisher aktiven Prüfeinrichtungen LS7 und LS10 passiv geschaltet werden können. Der Prüfabschnitt 3-6 bildet jetzt den aktiven Ersatzweg, während der Regelweg 4-5 passiv wird.

Die Prüfsignalsender der Prüfeinrichtungen LS4 und LS5 werden aufgrund des aufgetretenen Fehlers zunächst deaktiviert, dann jedoch periodisch reaktiviert, um eine erfolgreiche Reparatur des nunmehr passiven Regelwegs 4-5 zu erkennen. Wird die erfolgreiche Reparatur erkannt, kann eine automatische Zurückschaltung auf den Regelweg 4-5 erfolgen. Die automatische Zurückschaltung findet allerdings nicht statt, wenn der aufgetretene Fehler auf einen Teilausfall eines der Knoten OCC2 (Prüfabschnitt 3-4), OCC4 (Prüfabschnitt 5-6) zurückzuführen ist.

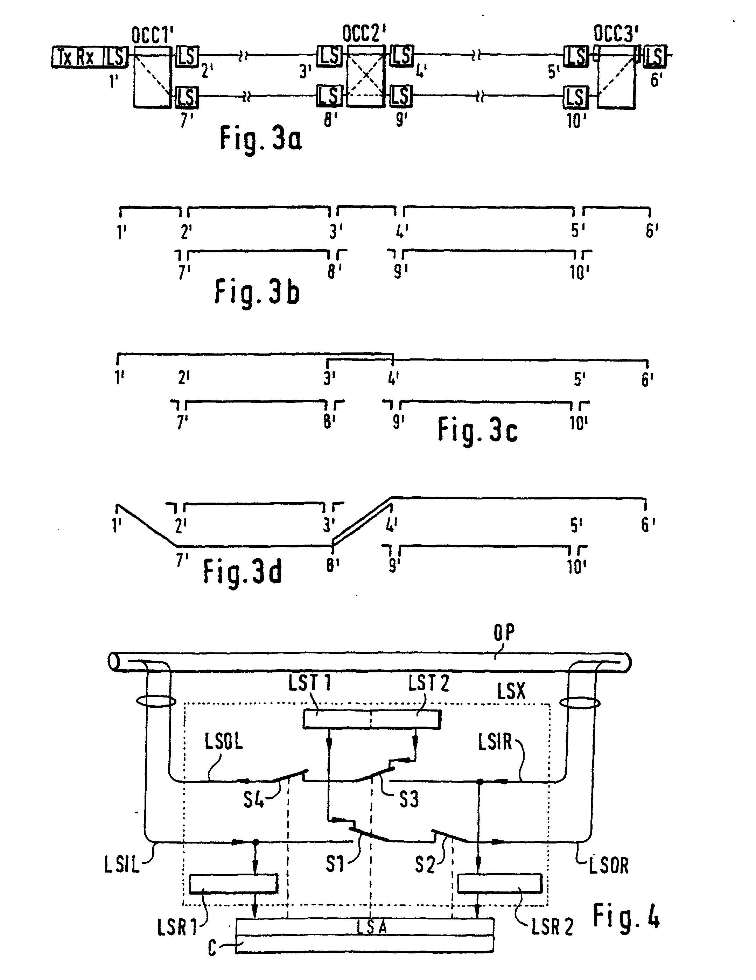

Figur 3a zeigt ein anderes Ausführungsbeispiel für eine optische Übertragungsstrecke OP zwischen zwei Sendern/Empfängern TxRx mit Prüfeinrichtungen LS1', LS6' an Leitungspunkten 1', 6'. Ein erster Knoten OCC1' bildet eine Verzweigung zu zwei Leitungspunkten 2', 7' mit zugehörigen Prüfeinrichtungen LS2', LS7'. Ein zweiter Knoten OCC2' ist als Kreuzweiche zwischen Regelwegen 1'-4', 3'-6' und Ersatzwegen 7'-8', 9'-10' angeordnet und weist vier Anschlüsse an den Schaltungspunkten 3', 4', 8', 9' mit Prüfeinrichtungen LS3', LS4', LS8', LS9' auf.

Ein dritter Knoten OCC3' führt die beiden Übertragungswege, die an Leitungspunkten 5', 10' mit Prüfeinrichtungen LS5', LS10' ankommen, zum Leitungspunkt 6' zusammen.

Figur 3b zeigt schematisch die sich daraus ergebenden optischen Abschnitte 1'-2', 2'-3', 3'-4', 4'-5', 5'-6', 7'-8', 9'-10'.

Figur 3c zeigt Prüfabschnitte der Anordnung gemäß Figur 3a für den ungestörten Fall.

Aus den obigen Regeln ergibt sich, daß ein optischer Abschnitt zu mehreren Prüfabschnitten gehören kann, wie sich dies auch in der Figur 3c für den optischen Abschnitt 3'-4' ergibt. Die Prüfabschnitte in Figur 3c sind die Abschnitte 1'-4', 3'-6', 7'-8' und 9'-10'. Die aktive Übertragung findet auf der Strecke 1'-2'-3'-4'-5'-6' statt. Die Strecken 7'-8' und 9'-10 stellen zunächst passive Ersatzwege dar.

Wird durch Ausfall des Prüfsignals eine Störung auf dem Regelweg 1'-4' festgestellt, wird eine Umschaltung veranlaßt, die in Figur 3d dargestellt ist. Die Strecke 2'-3' wird passiv geschaltet und die aktive Übertragung findet nunmehr auf dem Ersatzweg 7'-8' vom Schaltungspunkt 1' zum Leitungspunkt 4' statt. Der andere Ersatzweg 9'-10' wird in diesem Fall nicht als Ersatzweg benötigt, also nicht aktiv gemacht. Die Prüfabschnitte laufen nun von 1' zu 4' über die Leitungspunkte 7' und 8' einerseits und von 8' über 4', 5' zum Leitungspunkt 6' andererseits. Ferner werden die passiven Wege 2'-3' und 9'-10' auf Erhalt bzw. Wiedererreichen der Funktionalität überprüft.

Aus Figur 3d wird deutlicht, daß mit der vorliegenden Erfindung nur ein wirklich benötigter Ersatzweg aktiv geschaltet wird und daß diese Aktivschaltung durch die dargestellte Bildung von Prüfabschnitten und Überprüfung des Prüfsignals an den Enden der Prüfabschnitte erreicht wird. Der Vergleich der Figuren 3c und d verdeutlicht ferner, daß wiederum im Normalfall aktive Prüfeinrichtungen (LS7', LS8') passiv geschaltet werden und daß ursprünglich passiv geschaltete Prüfeinrichtungen LS2' aktiv geschaltet werden, wenn eine Neukonfiguration, z.B. gemäß Figur 3d gegenüber Figur 3c, erforderlich wird.

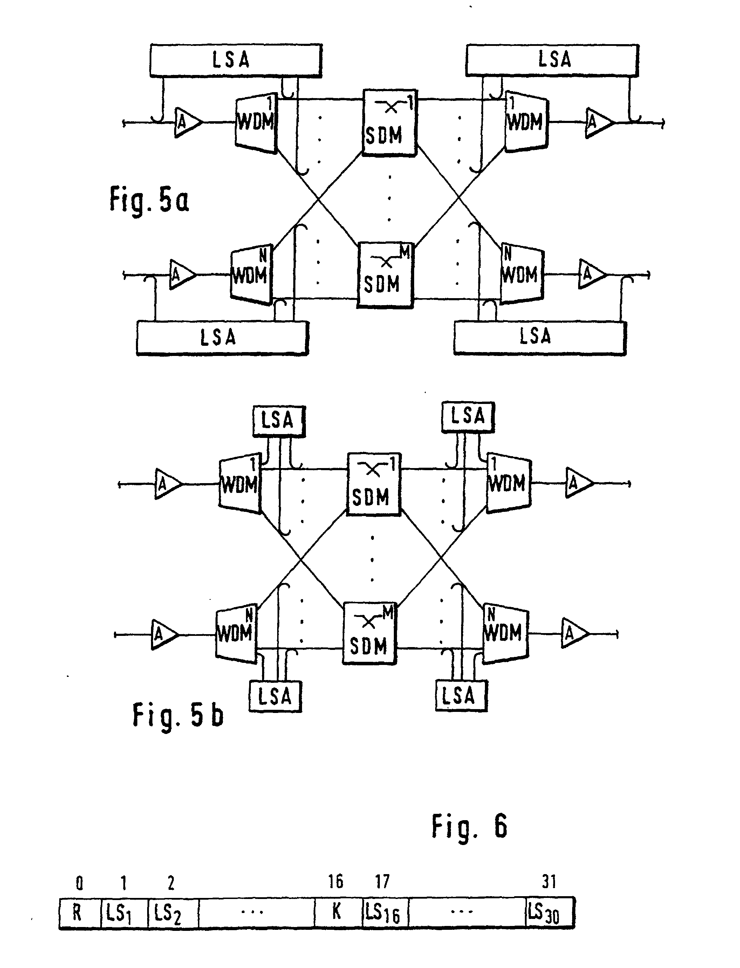

Figur 4 zeigt den schematischen Aufbau einer Prüfeinrichtung LSX, die in eine optische Übertragungsstrecke OP eingeschaltet ist.

Ein aus einer ankommenden Faser ausgekoppeltes Prüfsignal LSIL gelangt auf einen Prüfsignalempfänger LSR1, der es auf eine Prüfsignalaufbereitungsstufe LSA weiterleitet. Diese ist mit einem den Knoten steuernden Baustein C verbunden, der auf diese Weise die Information erhält, wenn kein gültiges Prüfsignal LSIL empfangen worden ist.

In analoger Weise empfängt ein Prüfsignalempfänger LSR2 ein aus der anderen Leitungsrichtung kommendes Prüfsignal LSIR einer Faser der optischen Übertragungsstrecke OP und leitet es ebenfalls in die Prüfsignalaufbereitungsstufe LSA weiter.

Die Prüfeinrichtung LSX enthält zwei Prüfsignalsender LST1 und LST2. Der erste Prüfsignalsender LST1 kann über zwei Schalter S1, S2 ein Prüfsignal LSOR als Ersatz für das terminierte Prüfsignal LSIL in die entsprechende Faser der optischen Übertragungsstrecke OP einspeisen. In entsprechender Weise speist der Sender LST2 ein Prüfsignal LSOL als Ersatz für das angekommene Prüfsignal LSIR in die in Gegenrichtung zeigende Faser der optischen Übertragungsstrecke OP über Schalter S3, S4 ein.

Soll die Prüfeinrichtung LSX passiv geschaltet werden, also die ankommenden Prüfsignale LSIL und LSIR lediglich weiterleiten, werden die Schalter S1, S3 umgeschaltet, so daß die Prüfsignalsender LST1, LST2 nicht mehr mit den entsprechenden Fasern der optischen Übertragungsstrecke OP verbunden sind und die geschlossenen Schalter S2, S4 die ankommenden Signale LSIL und LSIR einfach weiterleiten.

Die Schalter S2, S4 dienen der Unterbrechung der Aussendung von Prüfsignalen LSOL, LSOR für den Fall, daß sich in der angeschlossenen Übertragungsstrecke eine Unterbrechung ergeben hat und daher eine Aussendung eines Prüfsignals in Gegenrichtung unterbleiben soll, nachdem aus dieser Richtung kein gültiges Prüfsignal LSIL bzw. LSIR empfangen worden ist. Die Aussendung eines Prüfsignals LSOL bzw. LSOR kann auch deswegen mit den Schaltern S2 bzw. S4 unterbunden werden, weil aufgrund einer festgestellten Unterbrechung die Übertragung auf einem Ersatzweg stattfindet und eine Aussendung von Prüfsignalen nur noch periodisch erfolgt, damit eine etwaige Reparatur der ausgefallenen Übertragungsstrecke festgestellt werden kann. Nach dem Erkennen der erfolgreichen Reparatur kann das Prüfsignal wieder dauerhaft gesendet werden.

Figur 5a zeigt einen schematischen Aufbau eines Knotens mit N ankommenden Fasern und N abgehenden Fasern, auf denen eine Mehrzahl M von Nutzsignalen im Wellenlängenmultiplex übertragen wird. In dem in Figur 5a dargestellten Ausführungsbeispiel werden Prüfsignale außerhalb des für die Nutzsignale verwendeten Bandes übertragen und daher vor einem Eingangsverstärker A auf jeder Faser abgenommen und einer Prüfsignalaufbereitung LSA zugeführt. Die Mehrzahl von M Nutzsignalen wird in einem Wellenlängendemultiplexer WDM für die zugehörige Faser 1... N gedemultiplext, also räumlich nach M Wellenlängen auf M Leitungen getrennt. Jede Wellenlänge wird in einem Raum-Vielfach-Koppelnetz SDM durchgeschaltet und über einen Multiplexer WDM auf der Ausgangsseite zugeführt, in dem bis zu M Wellenlängen wieder zu einem Wellenlängen-Multiplexsignal auf einer Ausgangsfaser vereinigt werden. Jedes gedemultiplexte Signal ist mit der zugehörigen Prüfinformation aus dem ankommenden Prüfsignal von der Prüfsignalaufbereitung LSA auf der Eingangsseite versehen worden. Die Prüfinformationen der mit einem Multiplexer WDM auf der Ausgangsseite zusammengefaßten Nutzsignale werden von einer Prüfsignalaufbereitung LSA auf der Ausgangsseite zu einem Prüfsignal zusammengestellt und dem Nutzsignal am Ausgang eines Verstärkers A für die Ausgangsfaser hinzugefügt.

Figur 5b unterscheidet sich von dem Ausführungsbeispiel gemäß Figur 5a nur dadurch, daß das Prüfsignal auf einer von Nutzsignalen freigehaltenen Wellenlänge im Nutzsignalband übertragen wird und daher von der Prüfsignalaufbereitung LSA erst am Ausgang des Demultiplexers WDM auf der Eingangsseite des Knotens entnommen wird. Dementsprechend wird das neu zusammengestellte Prüfsignal auch dem jeweiligen Multiplexer WDM auf der Ausgangsseite hinzugefügt. Vorteilhaft ist hierbei einerseits die Einsparung von Komponenten und andererseits die Einbeziehung des Verstärkers A in den Prüfabschnitt,

Wenn mit den Prüfsignalaufbereitungen LSA zugleich entschieden wird, ob ein Prüfsignal weitergeleitet oder terminiert wird, übernimmt der beschriebene Knoten in dieser Konfiguration zugleich die Aufgaben der Prüfsignaleinrichtungen LSX beiderseits des Knotens OCC.

Figur 6 verdeutlicht einen möglichen Aufbau eines Prüfsignals LS, das auf einer für das Prüfsignal vorgesehenen Wellenlänge innerhalb einer Faser übertragen wird, in der auch bis zu 30 Nutzsignale, beispielsweise im Wellenlängenmultiplex, übertragen werden. Demzufolge enthält das in Figur 6 dargestellte Prüfsignal LS Prüfinformationen LS1 ... LS30 für dreißig Nutzsignale. Hierzu ist das Prüfsignal in 32 Zeitschlitze 0...31 aufgeteilt, von denen die Zeitschlitze 0 und 16 für Wortanfang-Erkennungssignale R,K vorgesehen sind und die übrigen Zeitschlitze 1...15 und 17...31 Prüfsignale LS1 bis LS30 enthalten. Die Prüfsignale können in einer 8-Bit-Darstellung beispielsweise eine geeignete Zahl darstellen.

Für die Übertragung der logischen Bits wird beispielsweise ein CMI-Code gemäß dem ITU-Standard ITU - T G 703 verwendet.

Selbstverständlich ist die vorliegende Erfindung auch bei der Verwendung anderer Multiplexarten für die Übermittlung mehrerer Nutzsignale in einer optischen Faser in völlig analoger Weise anwendbar.

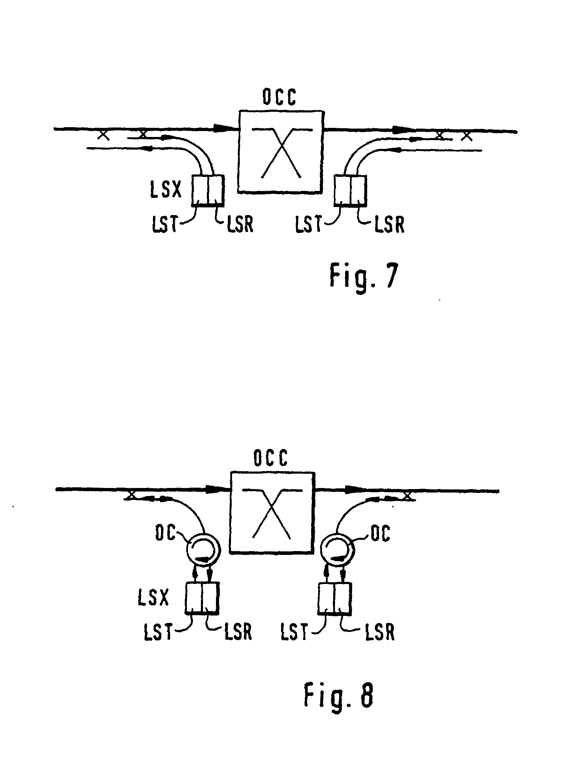

Die Figuren 6 und 7 zeigen schematisch die Anwendung der erfindungsgemäßen Prüfsignale bei einer unidirektionalen Übertragungseinrichtung für Nutzsignale. In einen Knoten OCC gelangen somit die Nutzsignale ausschließlich aus einer Richtung und werden ausschließlich in die andere Richtung wieder ausgesandt. Beiderseits des Knotens OCC befindet sich eine Prüfeinrichtung LSX mit jeweils einem Prüfsignalsender LST und einem Prüfsignalempfänger LSR, da die Prüfsignale bidirektional über die die Nutzdaten transportierenden Leitungen übermittelt werden. Die Trennung der Prüfsignale LS in beiden Richtungen erfolgt gemäß Figur 7 mit wellenlängenselektiven Kopplern, die die Prüfsignale selektiv ein- bzw. auskoppeln und über Leitungen mit dem Prüfsignalsender LST bzw. dem Prüfsignalempfänger LSR verbunden sind.

Gemäß dem in Figur 8 dargestellten Ausführungsbeispiel können die Prüfsignale in beiden Richtungen auf derselben Wellenlänge übertragen werden. Die Trennung erfolgt dann über optische Zirkulatoren OC, die mit jeweils einem Ausgang mit dem Prüfsignalempfänger LSR und mit einem Eingang mit dem Prüfsignalsender LST der zugehörigen Prüfeinrichtung LSX verbunden sind.

## Patentansprüche

1. Verfahren zur Überprüfung der Übertragung in einer optischen Übertragungseinrichtung mit optischen Fasern zur Weiterleitung optischer Nutzsignale zwischen Signalquellen und Signalsenken (S/D), an denen in die optischen Fasern beziehungsweise aus diesen Fasern optische Nutzsignale eingekoppelt beziehungsweise ausgekoppelt werden, die an Knoten (OCC) der Übertragungseinrichtung auf Ersatzwege umgeleitet werden können, wobei für wenigstens ein Nutzsignal Prüfsignale (LS; LSOL; LSOR) zwischen den Signalquellen und Signalsenken (S/D) sowie den Knoten (OCC) übertragen werden und das Vorhandensein der Prüfsignale überprüft wird,
**dadurch gekennzeichnet, daß**,
die Prüfsignale in der jeweiligen optischen Faser in beiden Richtungen übertragen werden und beim Fehlen eines Prüfsignals (LS; LSOL; LSOR) aus einer Leitungsrichtung ein Aussenden eines Prüfsignals in die Gegenrichtung unterbunden wird.

2. Verfahren nach Anspruch 1, **dadurch gekennzeichnet, daß** bei Vorhandensein eines Ersatzweges zwischen Knoten (OCC), zwischen denen das Prüfsignal (LS) nicht mehr empfangen wird, in den Knoten (OCC) eine automatische Umschaltung auf den Ersatzweg vorgenommen wird.

3. Verfahren nach Anspruch 1 oder 2, **dadurch gekennzeichnet, daß** beim Nichtempfang eines prüfsignale (LS) ein Indikationssignal zur Alarmgabe erzeugt wird.

4. Verfahren nach einem der Ansprüche 1 bis 3, **dadurch gekennzeichnet, daß** zur Prüfung das ankommende Prüfsignal (LSIL; LSIR) von dem Nutzsignal separiert und ein neues Prüfsignal (LSOL; LSOR) dem abgehenden Nutzsignal hinzugefügt wird.

5. Verfahren nach einem der Ansprüche 1 bis 4, **dadurch gekennzeichnet, daß** die Prüfsignale (LS) außerhalb des Nutzsignalbandes übertragen werden.

6. Verfahren nach einem der Ansprüche 1 bis 5, **dadurch gekennzeichnet, daß** die Prüfsignale (LS) aus Prüfinformationen (LS1...LS30) für eine Mehrzahl von auf einer Faser übertragbaren Nutzsignalen zusammengesetzt sind.

7. Verfahren nach Anspruch 6, **dadurch gekennzeichnet, daß** in den Knoten (OCC) auf mehreren Fasern ankommende Nutzsignale auf mehrere abgehende Fasern neu verteilt und die zugehörigen Prüfsignale (LS) neu zusammengestellt werden.

8. Verfahren nach einem der Ansprüche 1 bis 7, **dadurch gekennzeichnet, daß** die bidirektionale Übertragung und Auswertung der Prüfsignale bei unidirektional übertragenen Nutzsignalen durchgeführt wird, indem die in beiden Richtungen übertragenen Prüfsignale voneinander getrennt werden.

9. Optische Übertragungseinrichtung mit optischen Fasern zur Weiterleitung optischer Nutzsignale zwischen Signalquellen und Signalsenken(S/D), an denen optische Nutzsignale in die optischen Fasern einkoppelbar beziehungsweise aus diesen auskoppelbar sind, und mit Knoten (OCC) der Übertragungseinrichtung, an denen schaltbare Verzweigungen der Übertragungsstrecke (OP) realisiert sind, wobei aktive Prüfeinrichtungen (LSX) vorhanden sind, die zum Aussenden und Empfangen von in der jeweiligen optischen Faser zusätzlich zu dem Nutzsignal übertragenen Prüfsignalen (LS) eingerichtet sind,
**dadurch gekennzeichnet, dass**,
die aktiven Prüfeinrichtungen (LSX) an den Signalquellen und Signalsenken (S/D) sowie jeweils beiderseits der Knoten (OCC) vorhanden sind und bei fehlendem Empfang eines Prüfsignals (LSIL; LSIR) aus einer Leitungsrichtung das Aussenden eines Prüfsignals (LSOL; LSOR) in die Gegenrichtung unterbrechen.

10. Übertragungseinrichtung nach Anspruch 9, **dadurch gekennzeichnet daß** die aktiven Prüfeinrichtung (LSX) beim Nichtempfang eines Prüfsignals (LS) zur Erzeugung eines entsprechenden Indikationssignals zur Abgabe eines Alarms oder zur Umschaltung eines Knotens (OCC) eingerichtet sind.

11. Übertragungseinrichtung nach Anspruch 9 oder 10, **dadurch gekennzeichnet, daß** die aktiven Prüfeinrichtungen (LSX) mit einer Netzsteuerung verbunden sind und bei Nichtempfang eines Prüfsignals ein Indikationssignal an die Netzsteuerung abgeben.

12. Übertragungseinrichtung nach einem der Ansprüche 9 bis 11, **dadurch gekennzeichnet, daß** die aktiven Prüfeinrichtungen (LSX) das ankommende Prüfsignal (LSIL; LSIR) von dem Nutzsignal separieren und dem abgehenden Nutzsignal ein Prüfsignal (LSOR; LSOL) hinzufügen.

13. Übertragungseinrichtung nach einem der Ansprüche 9 bis 12, **dadurch gekennzeichnet, daß** die aktiven Prüfeinrichtungen (LSX) durch die Netzsteuerung passiv schaltbar sind und daß passiv geschaltete Prüfeinrichtungen (LSX) ein empfangenes Prüfsignal (LS) lediglich weiterleiten.

14. Übertragungseinrichtung nach einem der Ansprüche 9 bis 13, **dadurch gekennzeichnet, daß** die Prüfsignaleinrichtungen (LSX) Empfänger (LSR) und Sender (LST) für Prüfsignale (LS) außerhalb des Nutzsignalbandes aufweisen.

15. Übertragungseinrichtung nach einem der Ansprüche 9 bis 14, **dadurch gekennzeichnet, daß** die Prüfsignaleinrichtungen (LSX) Empfänger (LSR) und Sender (LST) für Prüfsignale (LS) innerhalb des Nutzsignalbandes aufweisen.

16. Übertragungseinrichtung nach einem der Ansprüche 9 bis 15, **dadurch gekennzeichnet, daß** die Sender (LST) und Empfänger (LSR) der Prüfeinrichtungen (LSX) zum Empfangen und Aussenden von Prüfsignalen (LS) eingerichtet sind, die Prüfinformationen (LS1...LS30) für eine Mehrzahl von auf der betreffenden Faser übertragenen Nutzsignalen enthalten.

17. Übertragungseinrichtung nach Anspruch 16, **dadurch gekennzeichnet, daß** in den Knoten (OCC) auf mehreren Fasern ankommende Nutzsignale auf mehrere abgehende Fasern neu verteilbar sind und daß die Knoten (OCC) zur neuen Zusammensetzung der zugehörigen Prüfsignale (LS) eingerichtet sind.

18. Übertragungseinrichtung nach einem der Ansprüche 9 bis 17, **dadurch gekennzeichnet, daß** die Signalquellen und Signalsenken (S/D) für eine unidirektionale Übertragung der Nutzsignale und die Prüfeinrichtungen (LSX) zur bidirektionalen Übertragung der Prüfsignale (LS) eingerichtet sind.

19. Übertragungseinrichtung nach Anspruch 18, **dadurch gekennzeichnet, daß** die Prüfeinrichtungen (LSX) mit für verschiedene Wellenlängen eingerichteten Prüfsignalempfängern und Prüfsignalsendern ausgestattet sind.

20. Übertragungseinrichtung nach Anspruch 18, **dadurch gekennzeichnet, daß** die Prüfeinrichtungen (LSX) über optische Zirkulatoren (OC) an die Fasern angeschlossen sind.

## Claims

1. Method for checking the transmission in an optical transmission device with optical fibres for passing on optical user signals between signal sources and signal sinks (S/D), at which optical user signals are input into the optical fibres or are output from the optical fibres and which optical user signals can be diverted on substitute paths to nodes (OCC) of the transmission device, with test signals (LS; LSOL; LSOR) for at least one user signal being transmitted between the signal sources and signal sinks (S/D) and the nodes (OCC), and the presence of the test signals being checked,
**characterized in that**
the test signals are transmitted in both directions in the respective optical fibre, and, in the absence of a test signal (LS; LSOL; LSOR) from one line direction, the transmission of a test signal in the opposite direction is suppressed.

2. Method according to Claim 1, **characterized in that**, if a substitute path exists between nodes (OCC) between which the test signal (LS) is no longer received, automatic switching to the substitute path is carried out in the nodes (OCC).

3. Method according to Claim 1 or 2, **characterized in that**, if no test signal (LS) is received, an indication signal is produced for alarm purposes.

4. Method according to one of Claims 1 to 3, **characterized in that**, for test purposes, the incoming test signal (LSIL; LSIR) is separated from the user signal, and a new test signal (LSOL; LSOR) is added to the outgoing user signal.

5. Method according to one of Claims 1 to 4, **characterized in that** the test signals (LS) are transmitted outside the user signal band.

6. Method according to one of Claims 1 to 5, **characterized in that** the test signals (LS) are composed of test information (LS1...LS30) for a number of user signals which can be transmitted on one fibre.

7. Method according to Claim 6, **characterized in that** user signals arriving on a number of fibres are redistributed between a number of outgoing fibres in the nodes (OCC), and the associated test signals (LS) are recomposed.

8. Method according to one of Claims 1 to 7, **characterized in that** the bidirectional transmission and evaluation of the test signals are carried out for unidirectionally transmitted user signals, **in that** the test signals which are transmitted in both directions are separated from one another.

9. Optical transmission device having optical fibres for passing on optical user signals between signal sources and signal sinks (S/D), at which optical user signals can be input into the optical fibres and can be output from them, and having nodes (OCC) of the transmission device, at which switchable branches of the transmission path (OP) are provided, with active test devices (LSX) being provided which are set up for transmission and reception of test signals (LS) which are transmitted in addition to the user signal in the respective optical fibre,
**characterized in that**
the active test devices (LSX) are provided at the signal sources and signal sinks (S/D) and on each of the two sides of the nodes (OCC), and if no test signal (LSIL; LSIR) is received from one line direction, the transmission of a test signal (LSOL; LSOR) in the opposite direction is interrupted.

10. Transmission device according to Claim 9, **characterized in that** the active test device (LSX) is set up such that, if no test signal (LS) is received, it produces a corresponding indication signal in order to emit an alarm or for switching of a node (OCC).

11. Transmission device according to Claim 9 or 10, **characterized in that** the active test devices (LSX) are connected to a network controller and, if no test signal is received, an indication signal is emitted to the network controller.

12. Transmission device according to one of Claims 9 to 11, **characterized in that** the active test devices (LSX) separate the incoming test signal (LSIL; LSIR) from the user signal, and add a test signal (LSOR; LSOL) to the outgoing user signal.

13. Transmission device according to one of Claims 9 to 12, **characterized in that** the active test devices (LSX) can be switched to be passive by the network controller, and **in that** test devices (LSX) which have been switched to be passive merely pass on a received test signal (LS).

14. Transmission device according to one of Claims 9 to 13, **characterized in that** the test signal devices (LSX) have receivers (LSR) and transmitters (LST) for test signals (LS) outside the user signal band.

15. Transmission device according to one of Claims 9 to 14, **characterized in that** the test signal devices (LSX) have receivers (LSR) and transmitters (LST) for test signals (LS) within the user signal band.

16. Transmission device according to one of Claims 9 to 15, **characterized in that** the transmitters (LST) and the receivers (LSR) of the test devices (LSX) are set up for reception and transmission of test signals (LS) which contain test information (LS1...LS30) for a number of user signals which are transmitted on the relevant fibre.

17. Transmission device according to Claim 16,
**characterized in that** user signals which arrive on a number of fibres in the nodes (OCC) can be redistributed between a number of outgoing fibres, and **in that** the nodes (OCC) are set up in order to recompose the associated test signals (LS).

18. Transmission device according to one of Claims 9 to 17, **characterized in that** the signal sources and signal sinks (S/D) are set up for unidirectional transmission of the user signals, and the test devices (LSX) are set up for bidirectional transmission of the test signals (LS).

19. Transmission device according to Claim 18, **characterized in that** the test devices (LSX) are equipped with test signal receivers and test signal transmitters which are set up for different wavelengths.

20. Transmission device according to Claim 18, **characterized in that** the test devices (LSX) are connected to the fibres via optical circulators (OC).

## Revendications

1. Procédé de contrôle de la transmission dans une installation de transmission optique à fibres optiques pour transmettre des signaux utiles optiques entre des sources de signaux et des puits de signaux (S/D), dans lesquels on couple dans les fibres optiques ou on découple hors des fibres des signaux optiques utiles, qui peuvent être déviés au niveau de noeuds (OCC) de l'installation de transmission vers des chemins de remplacement, et pour au moins un signal utile, on transmet des signaux de contrôle (LS ; LSOL ; LSOR) entre les sources de signaux et les puits de signaux (S/D) ainsi que les noeuds (OCC), et on vérifie la présence de signaux de contrôle,
**caractérisé en ce qu'**
on transmet les signaux de contrôle dans les deux directions des fibres optiques respectives et en l'absence d'un signal de contrôle (LS ; LSOL ; LSOR) d'une direction de ligne, on interdit l'émission d'un signal de contrôle dans la direction opposée.

2. Procédé selon la revendication 1,
**caractérisé en ce qu'**
en présence d'un chemin de remplacement entre les noeuds (OCC), entre lesquels on ne reçoit plus le signal de contrôle (LS), on effectue dans les noeuds (OCC), une commutation automatique vers le chemin de remplacement.

3. Procédé selon la revendication 1 ou 2,
**caractérisé en ce qu'**
en cas de non réception d'un signal de contrôle (LS), on génère un signal indicateur pour émettre une alarme.

4. Procédé selon l'une quelconque des revendications 1 à 3,
**caractérisé en ce que**
pour le contrôle, le signal de contrôle d'entrée (LSIL ; LSIR) est séparé du signal utile et on insère un nouveau signal de contrôle (LSOL ; LSOR) dans le signal utile sortant.

5. Procédé selon l'une quelconque des revendications 1 à 4,
**caractérisé en ce qu'**
on transmet les signaux de contrôle (LS) en dehors de la bande de signal utile.

6. Procédé selon l'une quelconque des revendications 1 à 5,
**caractérisé en ce que**
les signaux de contrôle (LS) sont composés d'informations de contrôle (LS1 ... LS30) pour un grand nombre de signaux utiles transmis par une fibre.

7. Procédé selon la revendication 6,
**caractérisé en ce que**
dans les noeuds (OCC), on répartit de nouveau les signaux utiles d'entrée venant de plusieurs fibres entre plusieurs fibres de sortie et on regroupe de nouveau les signaux de contrôle correspondants (LS).

8. Procédé selon l'une quelconque des revendications 1 à 7,
**caractérisé en ce que**
l'on effectue la transmission bidirectionnelle et l'exploitation des signaux de contrôle pour des signaux utiles à transmission unidirectionnelle en séparant les uns des autres les signaux de contrôle transmis dans les deux directions.

9. Installation de transmission optique avec des fibres optiques pour transmettre des signaux optiques utiles entre des sources de signaux et des puits de signaux (S/D) dans lesquels les signaux optiques utiles peuvent être injectés dans les fibres optiques ou découplés hors de celles-ci, avec des noeuds (OCC) dans l'installation de transmission au niveau desquels on peut réaliser des dérivations commutables du chemin de transmission (OP), avec des installations de contrôle actives (LSX) pour émettre et recevoir des signaux de contrôle (LS) à transmettre dans les fibres optiques respectives en plus du signal utile,
**caractérisée en ce que**
les installations de contrôle actives (LSX) existent au niveau des sources de signaux et des puits de signaux (S/D) et chaque fois de part et d'autre des noeuds (OCC), et en cas d'absence de réception d'un signal de contrôle (LSIL ; LSIR) d'une direction de ligne, on coupe l'émission d'un signal de contrôle (LSOL ; LSOR) dans la direction opposée.

10. Installation de transmission selon la revendication 9,
**caractérisée en ce que**
l'installation de contrôle active (LSX) en cas de non réception d'un signal de contrôle (LS), génère un signal indicateur correspondant pour émettre un signal d'alarme ou pour commuter un noeud(OCC).

11. Installation de transmission selon la revendication 9 ou 10,
**caractérisée en ce que**
les installations de contrôle actives (LSX) sont reliées à une commande de réseau et en cas de non réception d'un signal de contrôle, on émet un signal indicateur vers la commande de réseau.

12. Installation de transmission selon l'une quelconque des revendications 9 à 11,
**caractérisée en ce que**
les installations de contrôle actives (LSX) séparent le signal de contrôle d'entrée (LSIL ; LSIR) du signal utile et ajoutent un signal de contrôle (LSOR ; LSOL) au signal utile sortant.

13. Installation de transmission selon l'une quelconque des revendications 9 à 12,
**caractérisée en ce que**
les installations de contrôle actives (LSX) peuvent être commutées de manière passive par la commande de réseau et les installations de contrôle à commutation passive (LSX) transmettent uniquement un signal de contrôle (LS) reçu.

14. Installation de transmission selon l'une quelconque des revendications 9 à 13,
**caractérisée en ce que**
les installations de signal de contrôle (LSX) comportent des récepteurs (LSR) et des émetteurs (LST) pour des signaux de contrôle (LS) en dehors de la bande de signal utile.

15. Installation de transmission selon l'une quelconque des revendications 9 à 14,
**caractérisée en ce que**
les installations de signal de contrôle (LSX) comportent des récepteurs (LSR) et des émetteurs (LST) pour des signaux de contrôle (LS) dans la bande de signaux utiles.

16. Installation de transmission selon l'une quelconque des revendications 9 à 15,
**caractérisée en ce que**
les émetteurs (LST) et les récepteurs (LSR) des installations de contrôle (LSX) sont prévus pour recevoir et émettre des signaux de contrôle (LS) qui contiennent des informations de contrôle (LS1 ... LS30) pour un ensemble de signaux utiles à transmettre par les fibres correspondantes.

17. Installation de transmission selon la revendication 16,
**caractérisée en ce que**
dans les noeuds (OCC), des signaux utiles arrivant de plusieurs fibres sont répartis de nouveau entre plusieurs fibres de sortie, et on installe les noeuds (OCC) pour une nouvelle composition des signaux de contrôle correspondants (LS).

18. Installation de transmission selon l'une quelconque des revendications 9 à 17,
**caractérisée en ce qu'**
on installe les sources de signaux et les puits de signaux (S/D) pour une transmission unidirectionnelle des signaux utiles et les installations de contrôle (LSX) pour une transmission bidirectionnelle des signaux de contrôle (LS).

19. Installation de transmission selon la revendication 18,
**caractérisée en ce qu'**
on équipe les installations de contrôle (LSX) avec des récepteurs de signaux de contrôle et des émetteurs de signaux de contrôle prévus pour différentes longueurs d'ondes.

20. Installation de transmission selon la revendication 18,
**caractérisée en ce que**
les installations de contrôle (LSX) sont reliées aux fibres par des circulateurs optiques (OC).
